# EUROPEAN PATENT APPLICATION

(11) **EP 2 006 763 A2**
(43) Date of publication of application: **24.12.2008**
(21) Application number: 08150184.3
(22) Date of filing: 11.01.2008
(51) Int. Cl.: G06F 3/033

(54) **Computer mouse**

(30) Priority: 20.06.2007 KR 20070060608
(71) Applicant: Indigolab Co., Ltd., Gangnam-gu (KR)
(72) Inventor: Kim, Cheol Ho, SEOUL (KR)
(74) Representative: Leszczynski, André

(57) **Abstract**

Provided is a computer mouse including a grip portion having a flat bottom and a longitudinal central grip axis; a grip central point located at the center of the longitudinal central grip axis; the grip portion capable of standing on a flat surface via its flat bottom in order to allow the grip portion to move on the flat surface; a vertical axis perpendicular to the flat bottom and including the grip central point; a sensor portion which includes a sensor having a sensor central point located at the center of the sensor; the sensor being located distant in a forward direction from the grip portion; a vertical plane containing the vertical axis and the sensor central point; wherein the longitudinal central axis is angled from the vertical axis and tilted to the left or right with reference to the vertical plane; a bottom grip point defined by the intersection between the vertical axis and the flat bottom; and wherein the bottom grip point is located substantially at the center of the flat bottom.

## Description

### 1. Field of the Invention

The present invention relates to a computer mouse, and more particularly, to a computer mouse including a grip portion and a sensor portion in order to minimize wrist fatigue and rapidly move a cursor on a screen.

### 2. Description of the Related Art

A mouse is a computer input device that controls the movement of a cursor on a display screen during various computer tasks. A conventional mouse includes a sensor having a rubber or metal ball or an optical sensor in the center portion of a lower surface and at least one button and sometimes as many as three at an upper frontal portion, the buttons having different functions depending on a running program. The buttons are referred to as left and right buttons or selection and menu buttons. A wheel for scrolling through web pages and long documents is provided between the buttons.

To use the conventional mouse, a user holds the mouse under a hand while the lower surface of the mouse is in contact with a supporting surface. In this state, the user's palm contacts the upper surface of the mouse, and the user can press one of the buttons by using a forefinger or a middle finger or rotate the wheel by using the middle finger.

As described above, the conventional mouse includes a sensing unit in the center of the lower surface, so that a sensor moves according to movement of the hand. Therefore, there are problems in that the movement speed of the sensor is low, and the cursor cannot be moved fast enough to play a game or work.

In addition, in order to move the cursor to the left or right on the computer screen, the user has to move the wrist to the left or right, and thus the wrist joint and muscles can be damaged.

Moreover, since the user holds the mouse with the thumb, the middle finger or the ring finger, and the little finger, the positions of the fingers are not natural. Therefore, when the user uses the mouse for a long period of time, finger joints can also be damaged.

The present invention provides a computer mouse including a grip portion and a sensor, both of which have improved structures so that it is possible to reduce joint fatigue in the hand or wrist of a user and rapidly move a cursor on a computer screen during various computer tasks.

According to an aspect of the present invention, there is provided a computer mouse including: a grip portion having a flat bottom and a longitudinal central grip axis; a grip central point located at the center of the longitudinal central grip axis; the grip portion capable of standing on a flat surface via its flat bottom in order to allow the grip portion to move on the flat surface; a vertical axis perpendicular to the flat bottom and including the grip central point; a sensor portion which includes a sensor having a sensor central point located at the center of the sensor; the sensor being located distant in a forward direction from the grip portion; a vertical plane containing the vertical axis and the sensor central point; wherein the longitudinal central axis is angled from the vertical axis and tilted to the left or right with reference to the vertical plane; a bottom grip point defined by the intersection between the vertical axis and the flat bottom; and wherein the bottom grip point is located substantially at the center of the flat bottom.

According to an aspect of the present invention, the grip portion may include a thumb support to support the thumb of the user when the user holds the grip portion.

In addition, the grip portion may be formed so that a side portion of the hand of the user is in contact with the surface on which the computer mouse moves when the user holds the grip portion and further comprises a little finger support to support the little finger.

The little finger support may include a ring finger support to support the ring finger of the user when the user holds the grip portion.

The grip portion and the sensor portion may be engaged with each other by a connection portion which is slanted from the grip portion.

The sensor portion may be connected to the grip portion so that a distance between the sensor portion and the grip portion can be adjusted.

The sensor portion may be connected to the grip portion so as to rotate about a connection point between the sensor portion and the grip portion.

The grip portion may include a convex portion which protrudes at a portion which faces the palm of a user when the user holds the grip portion.

The computer mouse may further include an interface cable that extends from a side surface of the sensor portion.

The sensor portion may further include a resolution control button that is controlled by the user via the forefinger or the middle finger when the user holds the grip portion.

The grip portion may further include a forward button and a backward button for forward and backward scrolling on a computer screen, wherein the forward button and the backward button are controlled by the thumb when the user holds the grip portion.

The sensor portion may further include a cooling fan which generates an air current toward the grip portion.

The central axis of the grip portion may be tilted forward by a predetermined angle so that the top of the grip portion is located closer to the sensor than the bottom of the grip portion.

According to an aspect of the present invention, there is a provided a computer mouse including: a grip portion standing on a surface on which the computer mouse is moved; and a sensor portion which includes a sensor which is distant from the grip portion in a forward direction, wherein the grip portion comprises a little finger support to support the little finger of a user when the user holds the grip portion.

According to an aspect of the present invention, there is a provided a computer mouse including: a grip portion standing on a surface on which the mouse moves; and a sensor portion which includes a sensor which is distant from the grip portion in a forward direction, wherein the grip portion and the sensor portion are engaged with each other by a connection portion which protrudes forward from the grip portion and extends downward and is connected to the sensor portion.

According to an aspect of the present invention, there is a provided a computer mouse including: a grip portion standing on a surface on which the mouse moves; and a sensor portion which includes a sensor which is distant from the grip portion in a forward direction, wherein the grip portion comprises a convex portion which protrudes at a portion which faces the palm of a user when the user holds the grip portion.

According to an aspect of the present invention, there is a provided a computer mouse including: a grip portion standing on a surface on which the computer mouse moves; a sensor portion which includes a sensor which is distant from the grip portion in a forward direction; and an interface cable that extends from a left or right side surface of the sensor portion.

According to an aspect of the present invention, there is a provided a computer mouse including: a grip portion standing on a surface on which the computer mouse moves; and a sensor portion which includes a sensor which is distant from the grip portion in a forward direction, wherein the sensor portion is connected to the grip portion so that a distance between the sensor portion and the grip portion can be adjusted.

According to an aspect of the present invention, there is a provided a computer mouse including: a grip portion standing on a surface on which the computer mouse moves; and a sensor portion which includes a sensor which is distant from the grip portion in a forward direction, wherein the sensor portion is connected to the grip portion so as to rotate about a connection point between the sensor portion and the grip portion.

According to an aspect of the present invention, there is a provided a computer mouse including: a grip portion standing on a surface on which the computer mouse moves; and a sensor portion which includes a sensor which is distant from the grip portion in a forward direction, wherein the sensor portion further comprises a resolution control button controlled by the user via the forefinger or middle finger of the user while the user holds the grip portion.

According to an aspect of the present invention, there is a provided a computer mouse including: a grip portion standing on a surface on which the computer mouse moves; and a sensor portion which includes a sensor which is distant from the grip portion in a forward direction, wherein the grip portion comprises a forward button and a backward button for scrolling forward and backward on a computer screen and controlled by the thumb of the user when the user holds the grip portion.

According to an aspect of the present invention, there is a provided a computer mouse including: a grip portion standing on a surface on which the computer mouse moves; and a sensor portion which includes a sensor which is distant from the grip portion in a forward direction, wherein the sensor portion comprises a cooling fan which generates an air current toward the grip portion.

### BRIEF DESCRIPTION OF THE DRAWINGS

The above and other features and advantages of the present invention will become more apparent by describing in detail exemplary embodiments thereof with reference to the attached drawings in which:
FIG. 1 is perspective view of a computer mouse according to an embodiment of the present invention;
FIGS. 2 and 3 are rear side and right side views of the computer mouse of FIG. 1, respectively;
FIG. 4 is a bottom plan view of the computer mouse of FIG. 1;
FIGS. 5 and 6 are right rear and left front perspective views of the computer mouse of FIG. 1, respectively;
FIG. 7 is a perspective view illustrating a computer mouse according to another embodiment of the present invention; and
FIG. 8 is a perspective view illustrating a computer mouse according to another embodiment of the present invention.

### DETAILED DESCRIPTION OF THE INVENTION

Hereinafter, exemplary embodiments of the present invention will be described in detail with reference to the attached drawings.

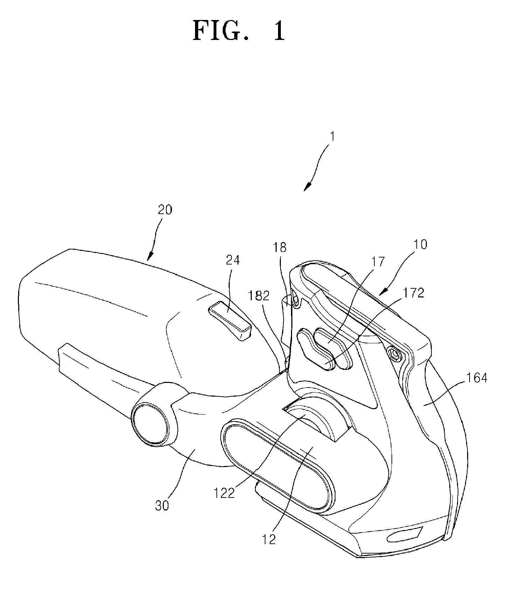

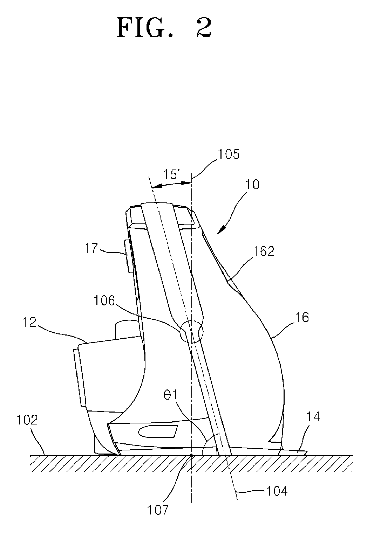

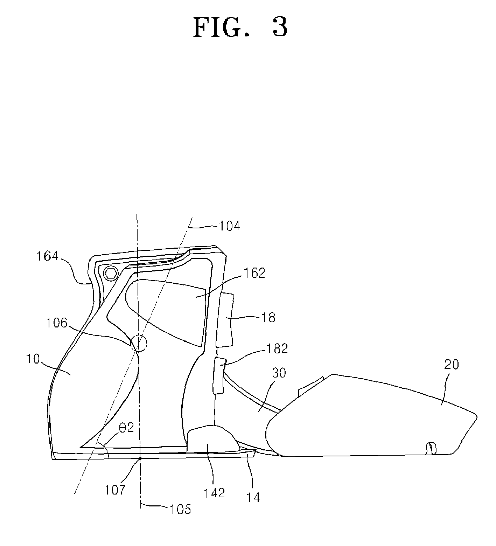

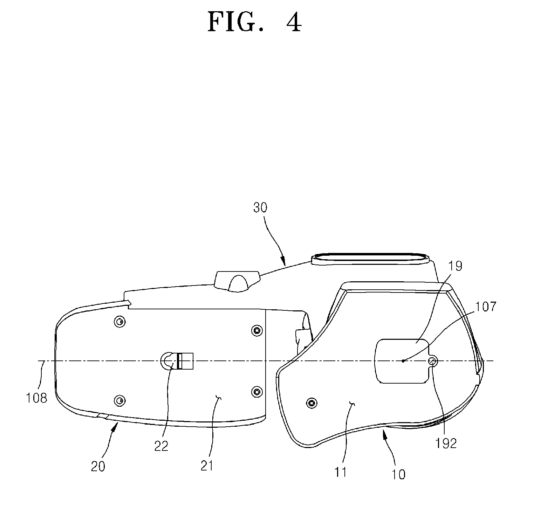

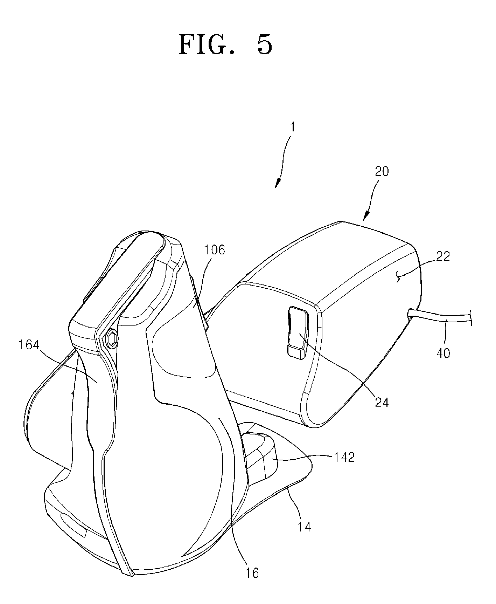

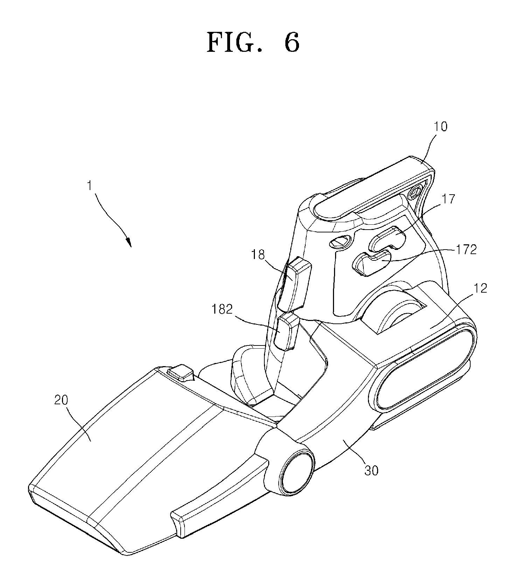

FIG. 1 is a left rear side view of a computer mouse 1 according to an embodiment of the present invention. FIGS. 2 and 3 are rear side and the right side views of the computer mouse 1, respectively. FIG. 4 is a bottom plan view of the computer mouse 1. FIGS. 5 and 6 are right rear side and left front side perspective views of the computer mouse 1 of FIG. 1, respectively.

As shown in FIGS. 1, 2, 3, 4, and 5, the computer mouse 1, which is used as an input device of a computer, includes a grip portion 10, a sensor portion 20, a connection portion 30, and an interface cable 40.

The grip portion 10 is standing on a surface 102 (see FIG. 2) on which the computer mouse 1 moves horizontally. A user holds the grip portion 10 to use the mouse 1.

A virtual central axis 104 passing through the grip portion 10 is tilted to the left or right. The mouse according to the current embodiment is for a right-handed person. In this case, the central axis 104 is tilted to the left by a predetermined angle θ1 as illustrated in FIG. 2. The predetermined angle θ1 is defined between the surface 102 and the central axis 104 and may range from 45° to less than 90° in consideration of design ergonomics and convenience of the user. More preferably, the predetermined angle θ1 may range from 70 to 80°. In the current embodiment, the predetermined angle is 75°.

The grip portion 10 is shifted to the left or right according to the titled angle of the central axis. When the central axis 104 of the grip portion 10 is tilted to the left, the grip portion 10 is shifted to the right.

Here, a shifted distance of the grip portion 10 is determined in consideration of the tilted angle of the central axis 104. More specifically, when the central axis 104 is largely titled, the shifted distance is large, and when the central axis 104 is slightly tilted, the shifted distance is small. In the current embodiment, the shifted distance of the grip portion 10 to the right is substantially half a value obtained by multiplying the length of the central axis 104 by cos(θ1).

Since the grip portion 10 is shifted to the right, a sensor 22 is disposed forward of a perpendicular lower point 107 of a central portion 106 of the central axis 104.

The central portion 106 of the central axis 104 is not a mathematically exact center point but a portion which indicates substantially half the length of the central axis 104. The perpendicular lower point 107 is the point where a vertical line with respect to the central portion 106 of the central axis 104 intersects an underlying surface11 of the grip portion 10. Referring to FIG. 4, a virtual line which extends forward from the perpendicular lower point 107 is a central line 108. The sensor 22 is substantially disposed on the central line 108.

When the sensor 22 is disposed forward of the perpendicular lower point 107, the "forward" in the specification means a forward direction perpendicular to a transverse line from the left to the light.

Although the central axis 104 of the grip portion 10 is tilted to the left, the grip portion 10 is shifted to the right proportionately to the tilted angle of the central axis 104 of the grip portion 10, so that the sensor 22 is disposed forward of the virtual perpendicular lower point 107 of the central portion 106 of the central axis 104. According to the aforementioned construction, a user who holds the grip portion 10 can move a mouse cursor on a display screen via the sensor 22 disposed forward of the center of the hand of the user.

If the grip portion 10 is not shifted to the right and only the central axis 104 is tilted to the left, the sensor 22 is not disposed forward of the perpendicular lower point 107 of the central portion 106 of the grip portion 10 but is disposed to the right. In this case, the sensor 22 is not disposed forward of the center of the hand of the user who holds the grip portion. Therefore, the user may feel uncomfortable to move the cursor on a display screen by using the sensor 22 of the mouse 1.

The central axis 104 is tilted to the left because when the user puts his/her hand on a table in a natural manner and bends the fingers to make an empty space inside the palm, the space inside the hand approximately has a cylindrical shape, and a central axis of the cylinder in an upward direction is slightly tilted to the left. Therefore, in order not to damage the wrist joint and muscles when the grip portion 10 is hold for a long period of time, the central axis 104 of the grip portion 10 of the mouse 1 according to the current embodiment is tilted to the left to match the shape of the user's hand.

The central axis 104 of the grip portion 10 is not a geometrical central axis of the grip portion 10 but a line which is aligned with a line passing through the center of the virtual cylindrical space formed inside the hand when the user holds the grip portion 10.

In the current embodiment, the mouse 1 is for a right-handed person, a mouse for a left-handed person may be constructed to be symmetrical to the mouse 1 according to the current embodiment.

Referring to FIG. 3, the central axis 104 of the computer mouse 1 according to the current embodiment is tilted forward at a predetermined angle θ2. The predetermined angle θ2 may range from 50° to less than 90°, and is 65° in the current embodiment. The grip portion 10 is tilted forward at the predetermined angle θ2 in order to position the hand naturally when the user holds the grip portion 10. As described above, since the line passing through the center of the virtual space formed by the hand of the user is tilted forward, the central axis 104 of the grip portion 10 of the mouse 1 according to the current embodiment is also tilted at the predetermined angle θ2. If the predetermined angle θ2 is larger or smaller than a value in the indicated range, the position of the hand can be unnatural.

The grip portion 10 of the mouse 1 according to the current embodiment may further include a thumb support 12.

The thumb support 12 is disposed at a position to support the thumb of the user when the user holds the grip portion 10. Therefore, the thumb support 12 is disposed to have a height of half the height of the grip portion 10 so that the user can put the thumb thereon comfortably.

According to the current embodiment, the thumb support 12 includes a wheel button 122 so that the user can scroll the computer screen. The user manipulates the wheel button 122 by using the thumb.

The grip portion 10 is formed so that a side portion of the hand of the user is placed on the surface 102 on which the mouse 1 is disposed when the user holds the grip portion 10. More specifically, the grip portion 10 has such a height that the side portion of the hand is placed on the surface 102 when the user holds the grip portion 10. If the side portion of the hand is not placed on the surface 102, the user who manipulates the mouse 1 may feel fatigue in the wrist or arm, and may also feel uncomfortable to precisely manipulate the mouse 1.

The grip portion 10 includes a little finger support 14. The little finger support 14 is formed at a position to support the little finger of the user when the user holds the grip portion 10. The little finger support 14 has a shape of a thin plate. An upper portion of the little finger support 14 is provided with a ring finger support 142 to support the ring finger of the user. The little finger support 14 and the ring finger support 142 are illustrated in FIGS. 5 and 6.

The ring finger support 142 is also provided so that the ring finger and the little finger of the user do not overlap. Due to the little finger support 142, a portion between the little finger and the ring finger does not sweat although the user uses the mouse over a long period of time.

The grip portion 10 also includes a convex portion 16. The convex portion 16 protrudes convexly to contact the palm of the user when the user holds the grip portion 10. Referring to FIG. 2, the convex portion 16 is formed at a right side surface of the grip portion 10. The convex portion 16 supports the palm of the user who holds the tilted grip portion 10. Therefore, due to the convex portion 16, the user feels comfortable when holding the grip portion 10.

The mouse 1 according to the current embodiment also includes a depression portion 162, which has a relatively concave shape at an upper portion of the convex portion 16 so that the user can feel more comfortable. As illustrated in FIG. 1 or 3, a concave portion 164 to allow the thumb to easily hold the grip portion 10 is formed at the upper portion of the grip portion 10.

The grip portion 10 further includes a forward button 17 and a backward button 172 for forward and backward scrolling on the computer screen, at positions where the user can control the forward and the backward buttons 17 and 172 by using the thumb while holding the grip portion 10. For example, the buttons 17 and 172 may be used when the user wants to see other Internet web page than a currently displayed one.

In addition, the grip portion 10 includes a selection button 18 at a position where the user can manipulate it by using the forefinger while holding the grip portion 10 and also includes a menu button 182 at a position where the user can manipulate it by using the middle finger.

The selection button 18 is called a click button and has the same function as that of a button disposed at the upper left side of a conventional mouse. The menu button 182 has the same function as that of a button disposed at the upper right side of the conventional mouse.

Referring to FIG. 4, the computer mouse 1 according to the current embodiment also includes a weight 19 which is detachable from the lower portion of the grip portion 10. The weight 19 is disposed so that the center of gravity of the grip portion 10 is at a lower position and may be mounted at the perpendicular lower point 107 at the underlying surface 11 of the grip portion 10. The weight 19 may be fixed to the lower portion of the grip portion 10 by using a fixing member 192 such as a screw. The weight 19 may have a different weight according to the preference or the need of the user.

The sensor 20 includes the sensor 22 which is distant from the grip portion 10 in a forward direction. Referring to FIG. 4, the sensor 22 is provided at the center portion of a base 21 of the sensor portion 20 and contacts the surface 102 on which the mouse moves. In the current embodiment, the sensor 22 is an optical sensor but may also be a ball sensor.

Since the sensor 22 is distant from the perpendicular lower point 107 of the central portion 106 of the central axis 104, although the user slightly rotates the grip portion 10 about the perpendicular lower point 107, the sensor 22 moves much.

When the user properly rotates the grip portion 10 about the perpendicular lower point 107 while simultaneously moving the grip portion 10 forward, backward, to the left, and to the right, the user can easily move the sensor 22 with a relatively smaller amount of motion as compared with that of the conventional mouse. In addition, as described above, the sensor 22 is disposed forward of the perpendicular lower point 107. As illustrated in FIG. 4, the sensor 22 is disposed on the central line 108.

The sensor portion 20 of the mouse 1 according to the current embodiment includes a resolution control button 24. The resolution control button 24 is used to control the resolution of the computer screen and is disposed at an upper rear side surface of the sensor portion 20 so as to be controlled by using the forefinger or the middle finger while the user is holding the grip portion.

The connection portion 30 is used to connect the grip portion 10 to the sensor portion 20. An end portion of the connection portion 30 protrudes forward from the grip portion 10 and extends downward so that the other end portion is connected to the sensor portion 20. In addition, according to the current embodiment, the connection portion 30 protrudes from the thumb support 12 and extends so as to be engaged with a left side portion of the sensor portion 20.

Since the end portion of the connection portion 30 is disposed to be higher than the other end portion, when the user holds the grip portion 10, the sensor portion 20 is effectively pressed by the weight of the hand and power of the user through the connection unit 30. In addition, two underlying portions of the mouse, which are distant from each other, are in contact with the surface 102, so that the user can comfortably manipulate the mouse 1, and the sensor 22 is attached to the base 21 stably.

Referring to FIG. 5, an interface cable 40 is an electric wire that connects an electric device such as a circuit substrate included in the computer mouse 1 to the computer. The interface cable 40 extends from a side surface of the sensor portion 20. More specifically, the interface cable 40 is provided at a right side surface which meets a surface that faces forward of the sensor portion 20.

In the prior art, an interface cable of a conventional wired mouse extends from a lower central portion of a surface which faces forward. However, the interface cable 40 of the computer mouse 1 according to the current embodiment extends from the side surface.

In general, when the user uses the computer mouse 1, the computer mouse 1 is disposed to be closer to the user than the keyboard. In this case, if the interface cable 40 is disposed to face forward, the keyboard may interfere with the interface cable 40. However, the interface cable 40 of the mouse 1 according to the current embodiment is provided to the side surface which faces to the right, so that the mouse 1 can be used without interference with the keyboard. In addition, since the mouse 1 according to the current embodiment is longer than the conventional mouse, the interface cable 40 that is provided to the side surface is more useful.

Hereinafter, operations and effects of the computer mouse 1 according to the current embodiment will be described.

Since the computer mouse 1 according to the current embodiment includes the grip portion 10, which is tilted in one direction and shifted in other direction, and the sensor 22, which his disposed substantially perpendicularly forward of the perpendicular lower point 107 of the central portion 106 of the central axis 104, the user can move the sensor 22 rapidly and accurately while holding the grip portion 10.

The grip portion 10 and the sensor 22 of the computer mouse 1 are constructed in consideration of structures of the arm, the wrist, and the hand of the user, so that the user can use the mouse 1 over a long period of time without inconvenience.

In addition, the computer mouse 1 according to the embodiment of the present invention includes the thumb support 12, the little finger support 14, and the ring finger support 142, so that the user can use the mouse 1 stably over a long period of time without fatigue in the fingers' joints.

Furthermore, since the computer mouse 1 includes the connection portion 30 to connect the grip portion 10 to the sensor portion 20, the sensor 22 contacts the surface 102 and therefore the computer mouse 1 is stable.

In addition, since the grip portion 10 of the computer mouse 1 is provided with the convex portion 16, at least a portion of the palm of the user who holds the grip portion 10 can be supported by the convex portion 16. In particular, since the grip portion 10 is tilted in one direction, the convex portion 16 which is formed at the other side surface of the grip portion 10 can support the portion of the palm of the user stably. Therefore, the hand of the user is stable and the user can use the mouse over a long period of time without feeling tired.

In addition, since the computer mouse 1 includes the wheel 122, the forward and backward buttons 17 and 172, and the selection and menu buttons 18 and 182 in consideration of a position of each finger of the user who holds the grip portion 10, the user can manipulate each button conveniently.

Also, since the computer mouse 1 includes the interface cable 40 which is provided to the right side surface of the sensor portion 20, the mouse 1 can be used without interference with the keyboard.

According to the current embodiment, the forward and backward buttons 17 and 172, selection and the menu buttons 18 and 182, and the resolution control button 24 each have indicated functions. However, each of the buttons can have a different function according to the setting of a computer game program or as needed.

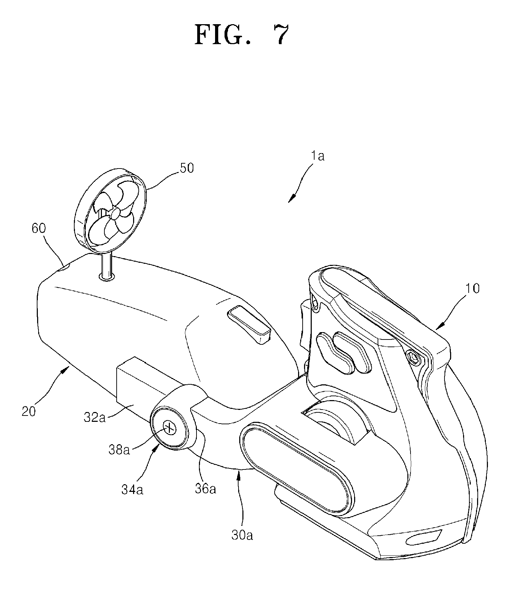

FIG. 7 illustrates a computer mouse 1a according to another embodiment of the present invention.

The computer mouse 1a illustrated in FIG. 7 is different from the computer mouse 1 according to the previous embodiment in that a position of a sensor portion 20 can be changed and a cooling fan 50 and a light-emitting device 60 are further included. Hereinafter, only components which are different from those in the previous embodiment are described.

The sensor portion 20 of the computer mouse 1a according to the current embodiment is connected to the grip portion 10 so that a distance between the sensor portion 20 and the grip portion 10 can be adjusted. More specifically, the sensor portion 20 is engaged with the grip portion 10 by a connection portion 30a so that a distance between a sensor 22 and the grip portion 10 can be adjusted.

Referring to FIG. 7, the connection portion 30a includes a pillar portion 32a, an engagement portion 34a, a penetration portion 36a, and a fixing portion 38a. The pillar portion 32a having a predetermined cross-section is fit into the penetrating portion 36a so as to slide therein. The pillar portion 32 is disposed at a desired position and is tightened by the fixing portion 38a, which is a screw member. As a result, the distance between the sensor portion 20 and the grip portion 10 can be controlled.

Therefore, the user can control the distance between the sensor portion 20 including the sensor 22 and the grip portion 10 according to a size of the hand or a type of a program or a game and also can control movement of the sensor 22 relative to the movement of the grip portion 10.

The computer mouse 1a according to the current embodiment includes the cooling fan 50 which generates an air current toward the grip portion 10. According to the current embodiment, the cooling fan 50 is provided at an upper side surface of the sensor portion 20 and can be detachable as needed.

When the user holds and manipulates the grip portion 10 of the mouse 1a, particularly in gaming, the hand sweats. The cooling fan 50 according to the current embodiment generates and blows an air current to cool the hand of the user. Power needed for the cooling fan 50 may be supplied through the interface cable 40 from the computer.

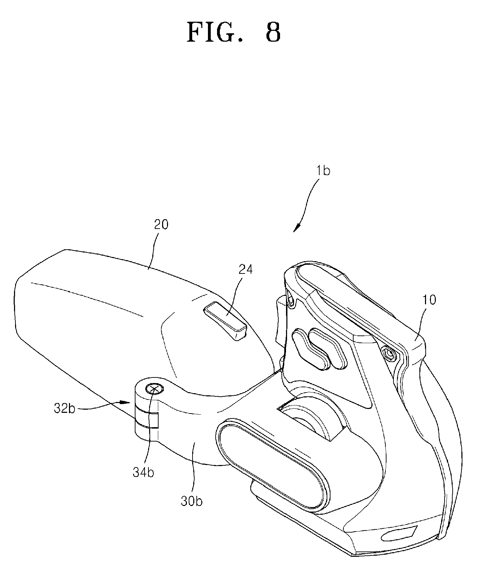

According to the current embodiment, the cooling fan 50 is externally provided at the upper portion of the sensor portion 20, but the present invention is not limited thereto. A cooling fan may be included in a sensor portion. More specifically, referring to FIG. 8, the cooling fan may be provided at a rear side surface of the sensor portion 20 around the resolution control button 24 (after shifting or removing the resolution control button 24) so as to generate an air current toward the grip portion 10.

The sensor portion 20 of the computer mouse 1a according to the current embodiment includes the light-emitting device 60 which can emit light forward. The light-emitting device 60 may be constructed with a light-emitting diode (LED) or a laser generating device. The light emitted by the light-emitting device 60 may have straight characteristic. The light-emitting device 60 may be a laser generating device used for a laser pointer.

The light-emitting device 60 can make the user feel better during a computer game. More specifically, during a computer game in which the user needs to aim at a target, the user may have the feeling that he/she virtually aims at the target with the light generated from the light-emitting device 60.

FIG. 8 illustrates a computer mouse 1b according to another embodiment of the present invention.

The computer mouse 1b illustrated in FIG. 8 is different from the computer mouse 1 in that a sensor portion 20 is connected to the grip portion 10 and can be rotated about a connection point that functions as a central axis and is used to connect the sensor portion 20 to the grip portion.

As illustrated in FIG. 8, the sensor portion 20 is hinged to the other end portion of the connection portion 30b. A point at which the sensor portion 20 is hinged is the connection point 32b. The sensor portion 20 can be disposed at a desired position by rotating it about the engagement member 34b provided at the connection point 32b as the axis of rotation, and the engagement member 34b is then fixed.

The user can rotate the sensor portion 20 with respect to the grip portion 10 and fix the sensor portion 20 at a desired position as needed. The sensor of the mouse 1b according to the current embodiment is basically disposed forward of the perpendicular lower point of the central portion of the central axis of the grip portion 10 but may be controlled to be disposed at the most proper position according a program or physical characteristic of the user.

As described above, the user can rapidly and accurately move the computer mouse according to the present invention with a small amount of motion and over a long period of time without fatigue in the arm and wrist.

## Claims

1. A computer mouse comprising:
a grip portion having a flat bottom and a longitudinal central grip axis;
a grip central point located at the center of the longitudinal central grip axis;
the grip portion capable of standing on a flat surface via its flat bottom in order to allow the grip portion to move on the flat surface;
a vertical axis perpendicular to the flat bottom and including the grip central point;
a sensor portion which includes a sensor having a sensor central point located at the center of the sensor;
the sensor being located distant in a forward direction from the grip portion;
a vertical plane containing the vertical axis and the sensor central point;
wherein the longitudinal central axis is angled from the vertical axis and tilted to the left or right with reference to the vertical plane;
a bottom grip point defined by the intersection between the vertical axis and the flat bottom; and
wherein the bottom grip point is located substantially at the center of the flat bottom.

2. The computer mouse of claim 1, wherein the grip portion comprises a thumb support to support the thumb of the user when the user holds the grip portion.

3. The computer mouse of claim 1, wherein the grip portion is formed in order to place a side portion of a hand of a user to be in contact with the surface on which the computer mouse moves when the user holds the grip portion; and
wherein the grip portion further comprises a little finger support in order to support the little finger.

4. The computer mouse of claim 3, wherein the little finger support comprises a ring finger support to support the ring finger of the user when the user holds the grip portion.

5. The computer mouse of claim 1, wherein the sensor portion includes a connection portion so that the grip portion and the sensor portion are engaged with each other by a connection portion which is slanted from the grip portion.

6. The computer mouse of claim 1, wherein the distance between the sensor portion and the grip portion can be adjusted.

7. The computer mouse of claim 1, wherein the sensor portion is connected to the grip portion so as to rotate about a connection point between the sensor portion and the grip portion.

8. The computer mouse of claim 1, wherein the grip portion comprises a convex portion which protrudes at a portion which faces the palm of a user when the user holds the grip portion.

9. The computer mouse of claim 1, wherein the computer mouse comprises an interface cable that extends from a side surface of the sensor portion.

10. The computer mouse of claim 1, wherein the sensor portion further comprise a resolution control button that is controlled by the user via the forefinger or the middle finger when the user holds the grip portion.

11. The computer mouse of claim 1, wherein the grip portion further comprises a forward button and a backward button for forward and backward scrolling on a computer screen, wherein the forward button and the backward button are controlled by the user via the thumb when the user holds the grip portion.

12. The computer mouse of claim 1, wherein the sensor portion comprises a cooling fan which generates an air current toward the grip portion.

13. The computer mouse of claim 1, wherein the longitudinal central axis of the grip portion is tilted forward by a predetermined angle so that the top of the grip portion is located closer to the sensor than the bottom of the grip portion.

14. The computer mouse of claim 1, wherein the grip portion comprises a selection button and a menu button that are controlled by the forefinger and the middle finger of the user, respectively, when the user holds the grip portion.

15. The computer mouse of claim 1, wherein the grip portion comprises a weight which is detachable at a lower portion of the grip portion.

16. The computer mouse of claim 1, wherein the sensor portion comprises a light-emitting device which emits light forward.
